# EUROPEAN PATENT APPLICATION

(11) **EP 4 737 076 A1**
(43) Date of publication of application: **06.05.2026**
(21) Application number: 25208714.3
(22) Date of filing: 14.10.2025
(51) Int. Cl.: B25J 19/06, E02F 9/26

(54) **DRIVE DEVICE AND WORK MACHINE**

(30) Priority: 30.10.2024 JP 2024190535
(71) Applicant: Yanmar Holdings Co., Ltd., Osaka-shi, Osaka (JP)
(72) Inventor: SAIKI, Miyuki, Osaka (JP); UEBAYASHI, Yuichi, Osaka (JP); HIRAMATSU, Toshifumi, Osaka (JP)
(74) Representative: Novagraaf International SA

(57) **Abstract**

[Problem] A technique is provided capable of simplifying a structure and accurately detecting torque acting on an elastic body.

[Solution] The drive device includes a drive source that generates a rotary drive force, and an elastic body that connects the drive source and a load. The elastic body includes a torsion bar.

## Description

### TECHNICAL FIELD

The present invention relates to a drive device and a work machine.

### BACKGROUND ART

A series elastic actuator in which a motor is incorporated is known as a prior art (for example, see Patent Document 1).

### PRIOR ART DOCUMENT

### PATENT DOCUMENT

Patent Document 1: Japanese Unexamined Patent Application Publication No. 2019-513568

### SUMMARY OF INVENTION

### TECHNICAL PROBLEM

In a drive device constituted by a series elastic actuator, for example, when a coil spring constitutes an elastic body, a member for connecting a motor as a drive source and the coil spring, a support member for the coil spring, a member for connecting the coil spring and an external load, and the like are required. Therefore, a structure of the drive device tends to be complicated. Further, in order to improve controllability, it is desirable to accurately detect a torque acting on the elastic body in the drive device constituted by the series elastic actuator.

The present invention has been made to solve the above problems, and an object of the present invention is to provide a technique capable of simplifying a structure and accurately detecting a torque acting on an elastic body.

### SOLUTION TO PROBLEM

A drive device according to an aspect of the present invention includes: a drive source that generates a rotary drive force; and an elastic body for connecting the drive source and a load, wherein the elastic body includes a torsion bar.

A work machine according to another aspect of the present invention includes the above drive device and the load driven by the drive device.

### ADVANTAGEOUS EFFECTS OF INVENTION

The above configuration can simplify a structure and accurately detect a torque acting on an elastic body.

### BRIEF DESCRIPTION OF DRAWINGS

FIG. 1 is a side view illustrating a schematic configuration of an electric shovel that is an example of a work machine according to an embodiment of the present invention;
FIG. 2 is a left rear perspective view illustrating a schematic configuration of a drive device provided in the electric shovel;
FIG. 3 is a right front perspective view illustrating a schematic configuration of the above drive device;
FIG. 4 is a horizontal cross-sectional view illustrating a configuration of the above drive device;
FIG. 5 is a left rear perspective view illustrating a schematic configuration of a modification of the above drive device; and
FIG. 6 is a horizontal cross-sectional view illustrating a configuration of a modification of the above drive device.

### DESCRIPTION OF EMBODIMENTS

An embodiment of the present invention will be described below with reference to the drawings.

### 1. Schematic Configuration of Work Machine

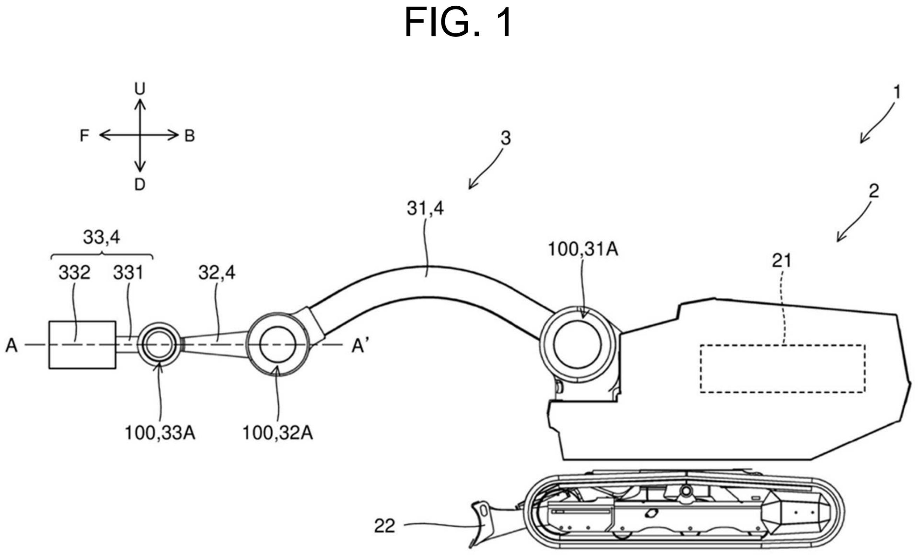

FIG. 1 is a side view illustrating a schematic configuration of an electric shovel 1 that is an example of a work machine according to an embodiment of the present invention. The electric shovel 1 includes a machine body 2 and a work machine portion 3. The machine body 2 is configured to be capable of traveling. However, the machine body 2 may be configured to be incapable of traveling. That is, for example, the machine body 2 may be fixed to the ground.

Here, directions in this specification are defined as follows. A direction in which the machine body 2 travels straight ahead is defined as a front-rear direction, one side in the front-rear direction is defined as "front", and another side in the front-rear direction is defined as "rear". In this specification, a side on which the work machine portion 3 is positioned with respect to the machine body 2 is referred to as "front". Moreover, a lateral direction perpendicular to the front-rear direction is defined as a left-right direction, and one side thereof is defined as "left" and the other side thereof is defined as "right". In this specification, a left side and a right side when viewed from the rear to the front are referred to as "left" and "right", respectively. A gravity direction perpendicular to the front-rear direction and the right-left direction is defined as an up-down direction, an upstream side in the gravity direction is defined as "up", and a downstream side is defined as "down". In the drawings, when necessary, forward is denoted by a symbol "F", backward by "B", leftward by "L", rightward by "R", upward by "U", and downward by "D". These directions are names used merely for the description and are not intended to limit actual positional relationships or directions.

The machine body 2 includes a battery unit 21. The battery unit 21 is configured by, for example, a lithium ion battery, and stores electric power to be supplied to each drive device 100 described later. Further, the machine body 2 rotatably supports the work machine portion 3.

The work machine portion 3 includes a boom 31, an arm 32, and an attachment 33. Each of the boom 31, the arm 32, and the attachment 33 is an example of a load 4. That is, the electric shovel 1 includes the load 4. The load 4 is not limited to the boom 31, the arm 32, and the attachment 33. For example, the load 4 may be the blade 22 rotatably supported by the machine body 2. The blade 22 is used for land leveling, soil removal, or the like.

By independently driving the boom 31, the arm 32, and the attachment 33, various types of work can be performed. More specifically, the boom 31 is formed of a metal member that extends while curving in one direction (the front-rear direction in FIG. 1). The boom 31 is not limited to the above configuration, and may extend, for example, along the above-described one direction. A base end portion of the boom 31 is rotatably supported by a front portion of the machine body 2. Specifically, the base end portion of the boom 31 is connected to the front portion of the machine body 2 via a boom drive portion 31A. When the boom drive portion 31A is driven, the boom 31 rotates in the up-down direction and the front-rear direction with respect to the machine body 2. The boom 31 may turn in the up-down direction and the front-rear direction with respect to the machine body 2, and swing (rotate) in the left-right direction.

The arm 32 is formed of a metal member extending in one direction. The arm 32 is not limited to the above configuration, and may extend, for example, along one direction while being curved. A base end portion of the arm 32 is rotatably supported by a tip end portion of the boom 31. Specifically, the base end portion of the arm 32 is coupled to the tip end portion of the boom 31 via an arm drive portion 32A. When the arm drive portion 32A is driven, the arm 32 rotates in the up-down direction and the front-rear direction with respect to the boom 31.

The attachment 33 includes a joint member 331 and an attachment body 332.

The joint member 331 is rotatably supported by the tip end portion of the arm 32. Specifically, the joint member 331 is coupled to the tip end portion of the arm 32 via an attachment drive portion 33A.

The attachment body 332 is detachably attached to the joint member 331. That is, the attachment body 332 can be replaced with various types. In FIG. 1, the attachment body 332 is a bucket used for excavation work of earth and sand or the like. The attachment body 332 may be, for example, a breaker, a grapple, or the like in addition to the bucket. The attachment body 332 may be attached to the joint member 331 in a non-detachable manner (may be integrally provided). When the attachment drive portion 33A is driven, the attachment 33 rotates in the up-down direction and the front-rear direction with respect to the arm 32. The configuration of the joint member 331 will be described later.

Each of the boom drive portion 31A, the arm drive portion 32A, and the attachment drive portion 33A includes the drive device 100. When the drive device 100 included in the boom drive portion 31A is driven, the boom 31 rotates. When the drive device 100 included in the arm drive portion 32A is driven, the arm 32 rotates. When the drive device 100 included in the attachment drive portion 33A is driven, the attachment 33 rotates. That is, the electric shovel 1 includes the drive device 100. Hereinafter, as an example, the configuration of the drive device 100 will be described based on the drive device 100 included in the attachment drive portion 33A.

### 2. Configuration of Drive Device

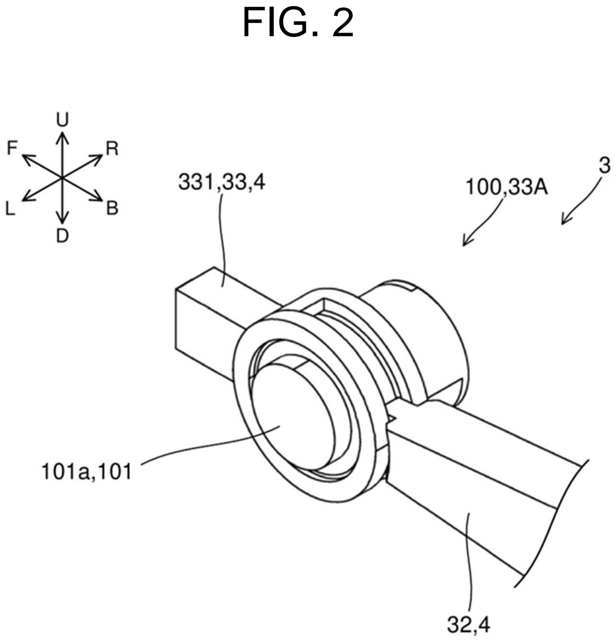

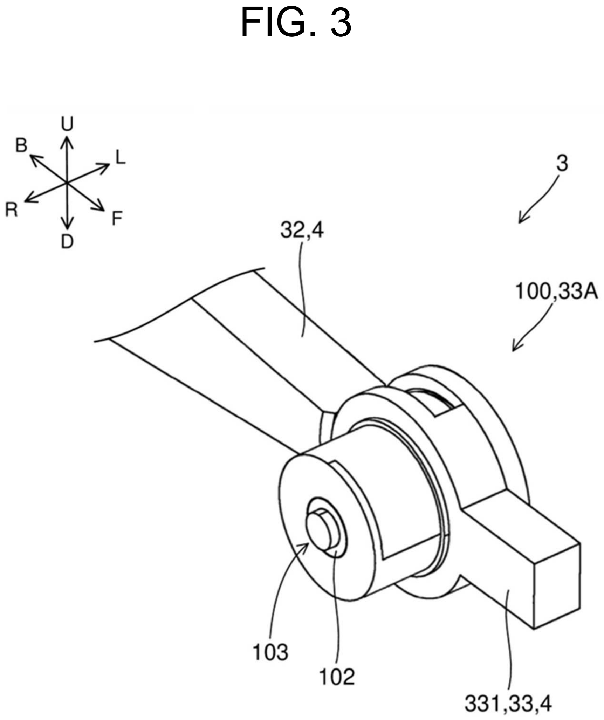

FIG. 2 is a left rear perspective view and FIG. 3 is a right front perspective, both illustrating a schematic configuration of the drive device 100. In FIG. 2 and subsequent drawings, the attachment body 332 is not illustrated for convenience. The drive device 100 includes a drive source 101, an elastic body 102, and a detecting portion 103. The drive source 101 includes an electric motor 101a.

The electric motor 101a is driven by electric power supplied from the battery unit 21 (see FIG. 1). The electric motor 101a is driven by electric power. Electric power is supplied from the battery unit 21 to the electric motor 101a via inverters (not illustrated) or the like disposed in the machine body 2 (see FIG. 1). When the electric motor 101a is driven, the electric motor 101a outputs a rotary drive force. That is, the drive source 101 (the electric motor 101a in the present embodiment) generates a rotary drive force. The electric motor 101a is constituted by a synchronous motor, an induction motor, or the like. However, the configuration of the electric motor 101a is not limited to the above type of motor.

From the viewpoint of easily realizing a configuration suitable for the electric shovel 1 (electric work machine), it is desirable that the drive source 101 includes the electric motor 101a driven by electric power as in the present embodiment.

However, the configuration of the drive source 101 is not limited to the above. For example, the drive source 101 may include a hydraulic motor that is driven by hydraulic oil or may include a pneumatic motor that is driven by compressed air.

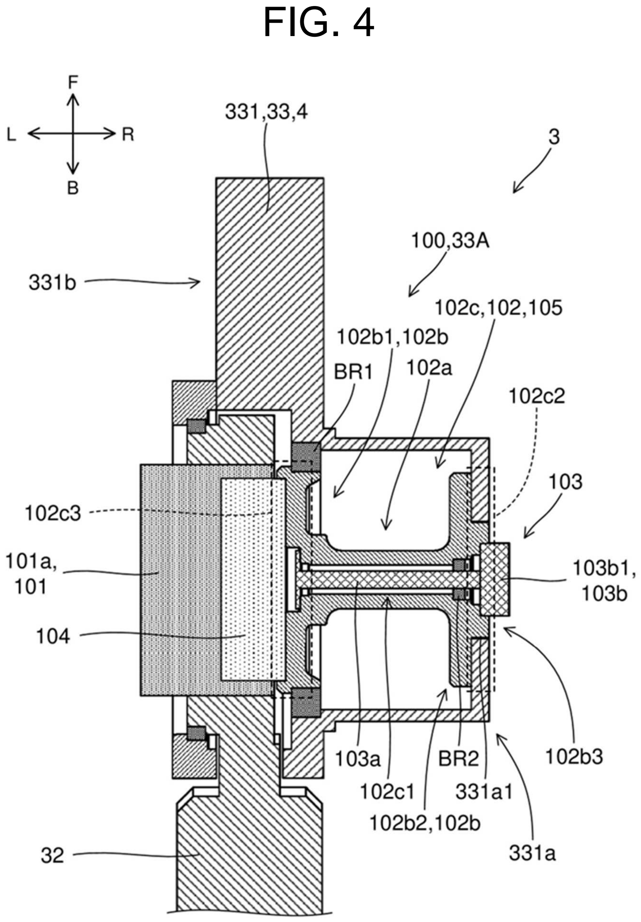

The elastic body 102 is configured to be elastically deformable. Specifically, when an external force is applied to the elastic body 102, the elastic body 102 is deformed, and when the external force is removed, the elastic body 102 returns to its original shape. The displacement (deformation amount) of the elastic body 102 is detected by the detecting portion 103. More details are as follows. FIG. 4 is a horizontal cross-sectional view of the drive device 100 taken along line A-A' in FIG. 1.

The elastic body 102 is formed of a metallic member integrally including a shaft portion 102a and a flange portion 102b. The shaft portion 102a is formed in a rod shape extending in the left-right direction. Further, the shaft portion 102a is configured to be elastically deformable in the torsional direction.

The flange portion 102b includes a first flange portion 102b1 and a second flange portion 102b2. Each of the first flange portion 102b1 and the second flange portion 102b2 is formed in a flat plate shape extending in the up-down direction and the left-right direction. Each of the first flange portion 102b1 and the second flange portion 102b2 is formed in a circular shape when the drive device 100 is viewed from the left side or the right side, but is not limited thereto, and may be, for example, an elliptical shape, a rectangular shape, a square shape, or a polygonal shape other than the rectangular shape and the square shape. A protruding portion 102b3 protruding rightward is formed in a central portion of the second flange portion 102b2.

The first flange portion 102b1 is integrally formed such that its central right-side area intersects with the left end of the shaft portion 102a. The second flange portion 102b2 is integrally formed such that its central left-side area intersects with the right end of the shaft portion 102a. Therefore, the shaft portion 102a, the first flange portion 102b1, and the second flange portion 102b2 are positioned in the order of the first flange portion 102b1, the shaft portion 102a, and the second flange portion 102b2 from left to right.

The first flange portion 102b1 is rotatably supported by the joint member 331 via a first shaft bearing BR1. In addition, the first flange portion 102b1 is connected to the electric motor 101a via a gearbox 104. That is, the elastic body 102 is connected to the drive source 101 (via the gearbox 104). The electric motor 101a is fixed to the arm 32.

The gearbox 104 reduces or increases the rotary drive force of the electric motor 101a and transmits the rotary drive force to the first flange portion 102b1. The gearbox 104 of the present embodiment is a reduction gear that reduces the rotary drive force of the electric motor 101a. However, the configuration of the gearbox 104 is not limited to the above, and may be, for example, a gear speed increaser that increases the rotary drive force of the electric motor 101a. The gearbox 104 includes various gears and the like. The gearbox 104 may include a belt capable of transmitting power. That is, the electric shovel 1 includes the gearbox 104, and the gearbox 104 changes the speed of the rotary drive force of the drive source 101 and outputs the rotary drive force to the elastic body 102 (a torsion bar 102c described later).

The second flange portion 102b2 is coupled to the joint member 331 of the attachment 33. That is, the elastic body 102 is connected to the load 4 (the attachment 33 in FIG. 4). Therefore, the elastic body 102 connects the drive source 101 (the electric motor 101a in the present embodiment) and the load 4 (the attachment 33 or the like in the present embodiment).

The joint member 331 is formed of a metallic member integrally including a cover portion 331a and a mounting portion 331b. The cover portion 331a is formed in a cylindrical shape extending in the left-right direction and having a closed right end. A fitting hole 331a1 penetrating in the left-right direction is provided in the closed right end portion (right side surface portion).

When the second flange portion 102b2 and the joint member 331 are coupled to each other, for example, first, the joint member 331 is moved from the right side to the left side of the elastic body 102. At this time, the fitting hole 331a1 of the joint member 331 is moved so as to correspond to (be aligned with) the protruding portion 102b3 of the second flange portion 102b2. Then, the joint member 331 is disposed to cover at least a part of the elastic body 102 while the protruding portion 102b3 is fitted into the fitting hole 331a1. Next, the joint member 331 and the second flange portion 102b2 are fastened by a fastening member (not illustrated) such as a bolt. Accordingly, the second flange portion 102b2 and the joint member 331 can be connected to each other. The second flange portion 102b2 and the joint member 331 may be connected to each other by joining by welding or the like instead of fastening by the above fastening member.

The mounting portion 331b is formed to extend in a direction (the front-rear direction in FIG. 4) orthogonal to the axial direction (the left-right direction in the present embodiment) of the cover portion 331a. A base end portion (a right rear end portion in FIG. 4) of the mounting portion 331b intersects with a left end portion of the cover portion 331a to be integrally formed. A tip end portion of the mounting portion 331b, which corresponds to the front end illustrated in FIG. 4, is configured to receive the attachment body 332 (see FIG. 1).

In the present embodiment, the shaft portion 102a and the flange portion 102b constitute a torsion bar 102c. Therefore, the torsion bar 102c is configured to be elastically deformable in the torsional direction. However, the configuration of the torsion bar 102c is not limited to the above. For example, the torsion bar 102c may have a configuration in which the flange portion 102b is removed, or may have a configuration in which a component different from the flange portion 102b is added.

As described above, the shaft portion 102a constituting the torsion bar 102c is located between the first flange portion 102b1 and the second flange portion 102b2 that constitute the torsion bar 102c in the left-right direction and extends in the left-right direction. Therefore, the torsion bar 102c extends in the left-right direction. Therefore, in the present embodiment, the axial direction of the torsion bar 102c means the left-right direction.

The torsion bar 102c is provided with a penetration portion 102c1 penetrating in the left-right direction. More specifically, the penetration portion 102c1 penetrates the first flange portion 102b1, the shaft portion 102a, and the second flange portion 102b2 from the left side toward the right side. That is, the torsion bar 102c has a penetration portion 102c1 that penetrates the torsion bar 102c in the axial direction (the left-right direction in the present embodiment).

The torsion bar 102c constitutes a transmission shaft that transmits the rotary drive force of the electric motor 101a to the attachment 33, and constitutes an outputting shaft 105 that drives the load 4 (the attachment 33 in the present embodiment). More specifically, when the electric motor 101a is driven, the rotary drive force of the electric motor 101a is transmitted to the torsion bar 102c via the gearbox 104. Then, the torsion bar 102c rotates, for example, to one side in the circumferential direction of the torsion bar 102c. The circumferential direction of the torsion bar 102c means a direction along an arc drawn around the central axis of the torsion bar 102c.

Since the second flange portion 102b2 constituting the torsion bar 102c and the joint member 331 of the attachment 33 are connected (coupled) to each other, the torsion bar 102c transmits the rotary drive force transmitted from the electric motor 101a to the attachment 33 while rotating. Then, the attachment 33 rotates to one side in the circumferential direction of the torsion bar 102c. Therefore, it can be said that the attachment 33 is rotated by the rotation of the torsion bar 102c. That is, the load 4 (in the present embodiment, the attachment 33 or the like) is driven by the drive device 100 (in the present embodiment, particularly, the outputting shaft 105 constituted by the torsion bar 102c). That is, the torsion bar 102c functions as the above transmission shaft and also functions as the outputting shaft 105.

Here, for example, it is assumed that the rotating attachment 33 bites into the ground and the operation of the attachment 33 is stopped. In this assumption, when the electric motor 101a is continuously driven, in the torsion bar 102c, the first flange portion 102b1 is rotated by the electric motor 101a, and the rotation of the second flange portion 102b2 is stopped by the stop of operation of the attachment 33. Then, a torque (also referred to as a torsional moment) acts on the torsion bar 102c, and the torsion bar 102c is twisted. At this time, torsional stresses are generated in the torsion bar 102c. That is, the drive device 100 of the present embodiment is a series elastic actuator in which the drive source 101 (the electric motor 101a in the present embodiment) is connected to the load 4 (the attachment 33 or the like in the present embodiment) via the elastic body 102. The elastic body 102 includes a torsion bar 102c.

According to the above configuration, for example, a member that connects the drive source 101 and the coil spring, a support member of the coil spring, a member that connects the coil spring and the load 4, and the like, which are necessary in a series elastic actuator in which the coil spring constitutes the elastic body 102, can be removed from the drive device 100. That is, when the torsion bar 102c constitutes the elastic body 102, the above members and the like, which are required when the coil spring constitutes the elastic body 102, become unnecessary. Accordingly, it is possible to reduce the number of components of the drive device 100 (particularly, the output side of the drive device 100). Therefore, the structure of the drive device 100 can be simplified. In the case of detecting the torque acting on the elastic body 102, it is possible to avoid a decrease in detection accuracy due to the resistance generated in each of the members or between the members. Therefore, the torque acting on the elastic body 102 can be detected more accurately in the case where the torsion bar 102c constitutes the elastic body 102 than in the case where the coil spring constitutes the elastic body 102. As described above, the structure of the drive device 100 can be simplified, and the torque acting on the elastic body 102 can be accurately detected.

In the drive device 100, particularly from the viewpoint of simplifying the structure for driving the load 4 (the attachment 33 and the like in the present embodiment), it is desirable that the torsion bar 102c constitutes the outputting shaft 105 for driving the load 4 as in the present embodiment.

When the torque no longer acts on the torsion bar 102c, the torsion bar 102c returns to its original shape. That is, the torsion bar 102c functions as a rod-shaped torsion spring.

The detecting portion 103 includes a detecting shaft 103a and a detector 103b. The detecting shaft 103a (also referred to as an input shaft) is formed by joining a plate-shaped member extending in the up-down direction and the left-right direction to a left end portion of a rod-shaped member extending in the left-right direction by welding or the like. That is, the detecting shaft 103a extends in the axial direction of the torsion bar 102c (the left-right direction in the present embodiment). The rod-shaped member is configured to be elastically deformable in a torsional direction. In addition, the above plate-shaped member is formed in a circular shape when the detecting shaft 103a is viewed from the left side, but is not limited thereto, and may have, for example, an elliptical shape, a rectangular shape, a square shape, or a polygonal shape other than the rectangular shape and the square shape.

The detector 103b is configured such that electronic components and the like are incorporated in a cylindrical housing extending in the left-right direction. In the present embodiment, the detector 103b is constituted by the encoder 103b1. The encoder 103b1 is fixed to the protruding portion 102b2 of the second flange portion 102b3. That is, the encoder 103b1 is fixed to the central portion of the second flange portion 102b2. The protruding portion 102b3 constitutes one end portion 102c2 positioned on the right side of the torsion bar 102c. That is, the detector 103b is fixed to one end portion 102c2 of the torsion bar 102c on one side (the right side in the present embodiment) in the axial direction. However, the fixing position of the detector 103b in the torsion bar 102c is not limited to the one end 102c2. For example, the fixing position of the detector 103b in the torsion bar 102c may be on the left side of the one end portion 102c2 and on the right side of the central portion (of the torsion bar 102c) in the left-right direction. That is, the detector 103b may be fixed to the torsion bar 102c on one side (the right side in the present embodiment) in the axial direction.

For example, a flat plate-shaped conversion member may be provided between the detector 103b and the one end portion 102c2. That is, the detector 103b may be fixed to the one end portion 102c2 via the conversion member.

The detector 103b is rotatably connected to the detecting shaft 103a. More specifically, a right end portion of the detecting shaft 103a is connected to a left side surface portion (bottom surface portion) of the detector 103b (encoder 103b1). When the detecting shaft 103a is connected to the detector 103b, for example, the detector 103b is fixed to the one end portion 102c2 of the torsion bar 102c before the above connection is performed. Then, the detecting shaft 103a is moved from the left side to the right side of the torsion bar 102c. At this time, the detecting shaft 103a is moved while corresponding to (being aligned with) the penetration portion 102c1 of the torsion bar 102c. Then, the detecting shaft 103a can be connected to the detector 103b while the detecting shaft 103a is inserted into the penetration portion 102cl. Therefore, the detecting portion 103 (particularly, the detecting shaft 103a) is provided on the penetration portion 102c1.

In the configuration in which the torsion bar 102c has the penetration portion 102c1 penetrating in the axial direction (the left-right direction in the present embodiment) of the torsion bar 102c, the following configuration is desirable from the viewpoint of compactly (efficiently) installing the detecting portion 103 and facilitating miniaturization of the drive device 100.

That is, the detecting portion 103 is desirably provided on the 102c1 of the penetration portion.

The detecting shaft 103a inserted into the penetration portion 102c1 is rotatably supported by the penetration portion 102c1 via the second shaft bearing BR2, and the plate-shaped member is connected to the central portion of the first flange portion 102b1. The first flange portion 102b1 constitutes the other end portion 102c3 located on the left side of the torsion bar 102c. That is, the detecting shaft 103a is connected to the other end portion 102c3 of the torsion bar 102c on the other side (the left side in the present embodiment) in the axial direction. However, the coupling position of the detecting shaft 103a in the torsion bar 102c is not limited to the other end 102c3. For example, the connection position of the detecting shaft 103a in the torsion bar 102c may be on the right side of the other end portion 102c3 and on the left side of the central portion (of the torsion bar 102c) in the left-right direction. That is, the detecting shaft 103a may be connected to the torsion bar 102c on the other side (the left side in the present embodiment) in the axial direction.

When the torsion bar 102c is twisted, for example, the first flange portion 102b1 rotates to one side in the circumferential direction of the torsion bar 102c with respect to the second flange portion 102b2. That is, a relative angle of the first flange portion 102b1 with respect to the second flange portion 102b2 is generated. Further, as described above, the central portion of the first flange portion 102b1 is coupled to the detecting shaft 103a, and the detector 102b2 to which the detecting shaft 103a is rotatably connected is fixed to the central portion of the second flange portion 102b2. Therefore, when the torsion bar 102c is twisted and the first flange portion 102b1 rotates to one side in the circumferential direction of the torsion bar 102c with respect to the second flange portion 102b2, the detecting shaft 103a rotates to the one side in the circumferential direction with respect to the detector 103b. That is, a relative angle (rotational displacement) of the detecting shaft 103a with respect to the detector 103b is generated. The relative angle of the detecting shaft 103a is an example of the displacement of the detecting shaft 103a, and is detected by the detector 103b. Therefore, the detector 103b detects a displacement of the detecting shaft 103a (a relative angle with respect to the detector 103b in the present embodiment).

The relative angle of the detecting shaft 103a with respect to the detector 103b corresponds to the torsion angle of the torsion bar 102c. Therefore, the displacement of the torsion bar 102c can be detected by detecting the displacement of the detecting shaft 103a by the detector 103b. That is, the detecting portion 103 detects the displacement (the torsion angle in the present embodiment) of the torsion bar 102c by the detector 103b.

From the viewpoint of detecting the torque by estimating the torque acting on the torsion bar 102c by a known conversion formula based on the displacement of the torsion bar 102c (torsion angle in the present embodiment), the following configuration is desirable. That is, as in the present embodiment, it is desirable that the drive device 100 includes the detecting portion 103 that detects the displacement of the torsion bar 102c.

When the torque acting on the torsion bar 102c is estimated (detected), the external force applied to the workpiece is estimated based on the above torque and the distance from the central axis of the torsion bar 102c to the point of contact (point of action) with the workpiece in the attachment 33.

For example, when the detecting portion 103 directly detects the displacement of the torsion bar 102c, the detecting portion 103 is increased in size, and it may be difficult to reduce the size of the drive device 100. Therefore, in this case, in order to easily reduce the size of the drive device 100, it is desirable to indirectly detect the displacement of the torsion bar 102c by the detecting portion 103. From this viewpoint, as in the present embodiment, it is desirable that the detecting portion 103 includes the detecting shaft 103a and the detector 103b that is connected to the detecting shaft 103a and detects the displacement of the detecting shaft 103a.

In the configuration in which the detecting shaft 103a connected to the detector 103b extends in the axial direction of the torsion bar 102c, the following configuration is desirable from the viewpoint of making it easy to rotate the detecting shaft 103a in order for the detector 103b to reliably detect the displacement of the detecting shaft 103a. That is, as in the present embodiment, it is desirable that the detector 103b is fixed to one side (the right side in the present embodiment) of the torsion bar 102c in the axial direction, and the detecting shaft 103a is connected to the other side (the left side in the present embodiment) of the torsion bar 102c in the axial direction.

From the viewpoint of reliably realizing a configuration in which the detecting shaft 103a is easily rotated (for example, a configuration in which the detecting shaft 103a is rotated even when the torque acting on the detecting shaft 103a is small), the following configuration is desirable. That is, as in the present embodiment, it is desirable that the detector 103b is fixed to one end portion 102c2 of the torsion bar 102c on one side (the right side in the present embodiment) in the axial direction of the torsion bar 102c. In addition, it is desirable that the detecting shaft 103a is connected to the other end 102c3 of the torsion bar 102c on the other side (the left side in the present embodiment) in the axial direction of the torsion bar 102c.

From the viewpoint of accurately detecting the displacement of the detecting shaft 103a (the relative angle with respect to the detector 103b in the present embodiment) and reducing the size of the detector 103b itself to easily reduce the size of the drive device 100, the following configuration is desirable. That is, as in the present embodiment, the detector 103b is preferably constituted by the encoder 103b1.

However, the configuration of the detector 103b is not limited to the encoder 103b1, and may be other than the encoder 103b1 as long as the displacement of the torsion bar 102c or the displacement of the detecting shaft 103a can be detected. For example, the detector 103b may be configured by a strain gauge capable of detecting a strain generated on the circumferential surface of the torsion bar 102c as the displacement of the torsion bar 102c. In this configuration, the penetration portion 102c1 may be removed from the torsion bar 102c. That is, for example, the torsion bar 102c may be solid. In addition, the detector 103b may be configured by a laser type displacement meter capable of detecting a movement amount of the other end portion 102c3 with respect to the one end portion 102c2 in the circumferential direction of the torsion bar 102c as the displacement of the torsion bar 102c.

As described above, the first flange portion 102b1 located on the left side of the torsion bar 102c is coupled to the electric motor 101a. That is, the drive source 101 (the electric motor 101a in the present embodiment) is connected to the other side (the left side in the present embodiment) of the torsion bar 102c in the axial direction. Further, as described above, the second flange portion 102b2 located on the right side of the torsion bar 102b2 is connected to the attachment 33. That is, the load 4 (the attachment 33 or the like in the present embodiment) is connected to one side (the right side in the present embodiment) of the torsion bar 102c in the axial direction.

The torsion bar 102c is rotated by a drive source 101. That is, the torsion bar 102c is rotatable with respect to the drive source 101. For this reason, in order to protect the connecting portion between the torsion bar 102c and the drive source 101 from earth and sand or the like coming from the outside of the drive device 100, the drive source 101 side of the torsion bar 102c is often disposed at a position that is difficult to access from the outside of the drive device 100. On the other hand, the torsion bar 102c and the load 4 are non-rotatably connected. For this reason, the load 4 side of the torsion bar 102c is often disposed at a position easily accessible from the outside of the drive device 100 as compared with the drive source 101 side. Therefore, when the detector 103b is fixed to the torsion bar 102c, if the detector 103b is brought closer to the load 4 than the drive source 101, the detector 103b is more easily accessed from the outside of the drive device 100 than when the detector 103b is brought closer to the drive source 101 than the load 4. This facilitates the fixing operation of the 103b of the detector. When the fixing work of the detector 103b is easy, for example, the workability of the replacement work of the detector 103b is improved. If the position is easily accessed from the outside of the drive device 100, it is easy to secure an arrangement space of the detector 103b, and it is easy to arrange even a relatively large detector 103b.

As described above, the detector 103b is fixed to one side (the right side in the present embodiment) of the torsion bar 102c in the axial direction of the torsion bar 102c. Therefore, from the viewpoint of easily realizing a configuration in which the detector 103b is fixed to the torsion bar 102c closer to the load 4 than the drive source 101, the following configuration is desirable. That is, as in the present embodiment, it is desirable that the drive source 101 (the electric motor 101a in the present embodiment) is connected to the other side (the left side in the present embodiment) of the torsion bar 102c in the axial direction of the torsion bar 102c in the torsion bar center. In addition, it is desirable that the load 4 (the attachment 33 or the like in the present embodiment) is connected to one side (the right side in the present embodiment) of the torsion bar 102c in the axial direction of the torsion bar 102c in the torsion bar center.

In the present embodiment, the electric motor 101a and the torsion bar 102c are connected via the gearbox 104 as described above. The gearbox 104 is positioned leftward of the first flange portion 102b1. That is, the gearbox 104 is disposed on the other side (the left side in the present embodiment) of the torsion bar 102c in the axial direction with respect to the torsion bar 102c. More specifically, the gearbox 104, the torsion bar 102c, and the detector 103b are arranged in this order from the other side in the axial direction of the torsion bar 102c toward one side (the right side in the present embodiment) in the axial direction of the torsion bar 102c. Therefore, the gearbox 104 is disposed on the side opposite to the detector 103b with respect to the torsion bar 102c in the axial direction (the left-right direction in the present embodiment) of the torsion bar 102c.

However, the arrangement position of the gearbox 104 is not limited to the above. For example, the gearbox 104 may be disposed on one side in the axial direction of the torsion bar 102c with respect to the torsion bar 102c. In addition, the gearbox 104 may be disposed on both one side of the torsion bar 102c in the axial direction and the other side of the torsion bar 102c in the axial direction with respect to the torsion bar 102c. That is, the gearbox 104 may be disposed on at least one of one side of the torsion bar 102c in the axial direction and the other side of the torsion bar 102c in the axial direction with respect to the torsion bar 102c.

Even in a configuration in which the drive device 100 includes the gearbox 104 that changes the speed of the rotary drive force of the drive source 101 (the electric motor 101a in the present embodiment) and outputs the rotary drive force to the torsion bar 102c, it is desirable to avoid an increase in the size of the drive device 100 in the radial direction of the torsion bar 102c.

From this viewpoint, as in the present embodiment, it is desirable that the gearbox 104 is disposed on at least one of one side in the axial direction of the torsion bar 102c and the other side in the axial direction of the torsion bar 102c with respect to the torsion bar 102c. The radial direction of the torsion bar 102c portion means a direction orthogonal to the central shaft of the torsion bar 102c portion.

Even in the configuration in which the drive device 100 includes the gearbox 104, it is desirable to improve the workability of the replacement work of the detector 103b by securing the accessibility to the detector 103b and facilitating the fixing work of the detector 103b. From this viewpoint, as in the present embodiment, it is desirable that the gearbox 104 is disposed on the side opposite to the detector 103b with respect to the torsion bar 102c in the axial direction of the torsion bar 102c (the left-right direction in the present embodiment).

### 3. Modification of Drive Device

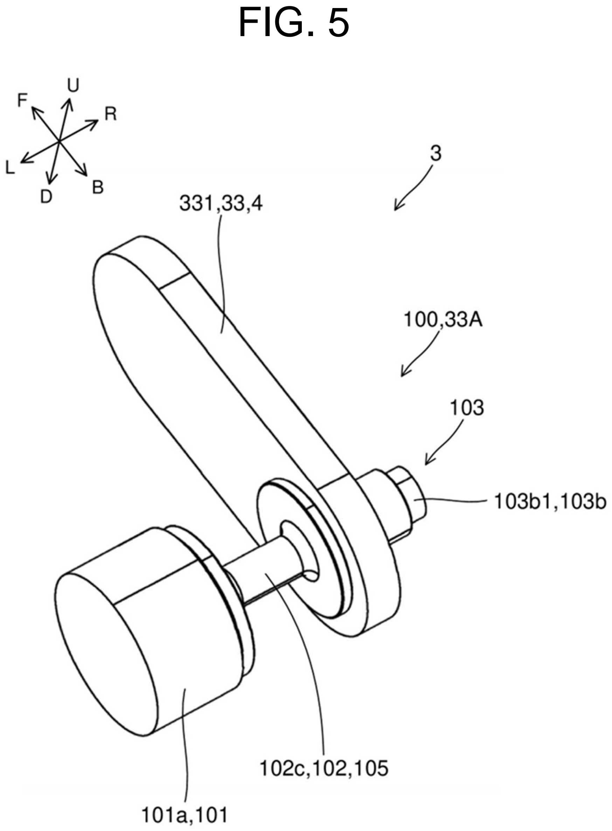

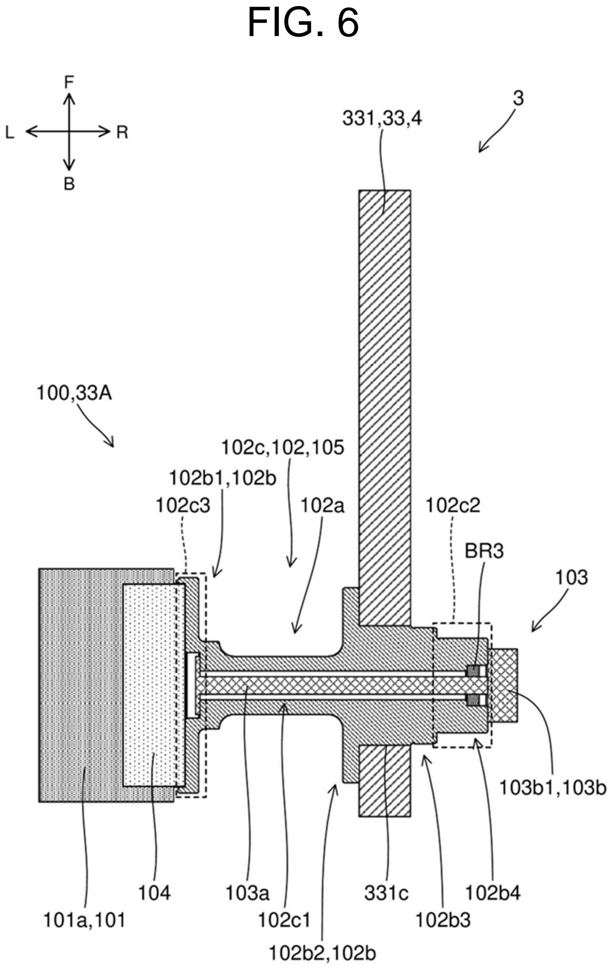

A configuration of a modification of the drive device 100 will be described with reference to FIGS. 5 and 6. FIG. 5 is a left rear perspective view illustrating a configuration of a modification of the above drive device100. FIG. 6 is a horizontal cross-sectional view of the drive device 100 horizontally cut at a position through which the central shaft of the torsion bar 102c passes. In FIGS. 5 and 6, the arm 32 and the like are not illustrated for convenience. The drive device 100 illustrated in FIGS. 5 and 6 has the same configuration as that of the drive device 100 illustrated in FIG. 1 and the like except that the shape of the torsion bar 102c is different. Further, the joint member 331 illustrated in FIGS. 5 and 6 has a shape different from that of the joint member 331 illustrated in FIG. 1 and the like in order to correspond to the shape of the torsion bar 102c. Thus, the following description will be centered on these different points, and the same points will not be described. The same members and the like as those of the drive device 100 illustrated in FIG. 1 and the like are denoted by the same reference numerals.

In the torsion bar 102c of the modification, a convex portion 102b4 protruding rightward is formed at the tip end (right end) of the protruding portion 102b3 of the second flange portion 102b2. The outer periphery of the convex portion 102b4 is configured to be smaller than the outer periphery of the protruding portion 102b3. An encoder 103b1 (detector 103b) is fixed to a right end portion of the convex portion 102b4. That is, in the modification, in particular, the convex portion 102b4 constitutes the one end portion 102c2 of the torsion bar 102c. However, the entire second flange portion 102b2 including the convex portion 102b4 and the protruding portion 102b3 may constitute the one end portion 102c2.

The joint member 331 is formed of a plate-shaped metal member extending in one direction (the front-rear direction in FIGS. 5 and 6). The joint member 331 is provided with a through hole 331c penetrating in the left-right direction. The torsion bar 102c and the attachment 33 are connected by joining the second flange portion 102b2 and the joint member 331 by welding or the like in a state where the protruding portion 102b3 is fitted to the through hole 331c.

### 4. Supplement

In the present embodiment, the case where the left-right direction is the "axial direction of the torsion bar 102c", the right side is the "one side in the axial direction of the torsion bar 102c", and the left side is the "other side in the axial direction of the torsion bar 102c" has been described, but the present invention is not limited thereto. For example, the axial direction of the torsion bar 102c may be the front-rear direction, the up-down direction, or an oblique direction inclined with respect to at least one of the left-right direction, the front-rear direction, and the up-down direction. Further, the left side may be referred to as "one side in the axial direction of the torsion bar 102c", and the right side may be referred to as "the other side in the axial direction of the torsion bar 102c". That is, the left and right may be reversed.

In the present embodiment, a configuration in which the number of detectors 103b is one has been described, but the number of detectors 103b is not limited to one. For example, the number of detectors 103b may be two, or three or more. In particular, when there are two detectors 103b, the two detectors 103b may be separately fixed to one side (the right side in the present embodiment) and the other side (the left side in the present embodiment) of the torsion bar 102c in the axial direction of the torsion bar 102c.

In the present embodiment, the configuration in which the detector 103b is fixed to one side of the torsion bar 102c in the axial direction and the detecting shaft 103a is coupled to the other side of the torsion bar 102c in the axial direction has been described, but the present invention is not limited to this configuration. For example, the detector 103b may be fixed to the other side of the torsion bar 102c in the axial direction, and the detecting shaft 103a may be connected to the one side of the torsion bar 102c in the axial direction.

### 5. Appendices

The drive device 100 and the electric shovel 1 described in the present embodiment can also be expressed as a drive device and a work machine illustrated in the following appendices.

A drive device of appendix (1) includes:
a drive source that generates a rotary drive force; and
an elastic body that connects the drive source and a load,
wherein the elastic body includes a torsion bar.

A drive device of appendix (2) is the drive device according to appendix (1), wherein
the torsion bar constitutes an outputting shaft that drives the load.

A drive device of appendix (3) is the drive device according to appendix (1) or (2), further including:
a detecting portion that detects displacement of the torsion bar.

A drive device of appendix (4) is the drive device according to appendix (3), wherein
the torsion bar has a penetration portion penetrating in an axial direction of the torsion bar, and
the detecting portion is provided in the penetration portion.

A drive device of appendix (5) is the drive device according to appendix (4), wherein
the detecting portion includes
a detecting shaft extending in the axial direction and
a detector detecting displacement of the detecting shaft, wherein
the detector is fixed to one side of the torsion bar in the axial direction, and
the detecting shaft is connected to the other side of the torsion bar in the axial direction.

A drive device of appendix (6) is the drive device according to appendix (5), wherein
the detector is fixed to one end portion of the torsion bar on one side in the axial direction, and
the detecting shaft is connected to the other end portion of the torsion bar on the other side in the axial direction.

A drive device of appendix (7) is the drive device according to appendix (5) or (6), wherein
the drive source is connected to the other side of the torsion bar in the axial direction, and
the load is connected to the one side of the torsion bar in the axial direction.

A drive device of appendix (8) is the drive device according to any one of appendices (5) to (7), wherein
the detector includes an encoder.

A drive device of an appendix (9) is the drive device according to any one of the appendices (5) to (8), further including:
a gearbox that changes a speed of a rotary drive force of the drive source and outputs the rotary drive force to the torsion bar, wherein
the gearbox is disposed on at least one of one side in the axial direction and the other side in the axial direction with respect to the torsion bar.

A drive device of appendix (10) is the drive device according to appendix (9), wherein
the gearbox is disposed on a side opposite to the detector with respect to the torsion bar in the axial direction.

A drive device of appendix (11) is the drive device according to any one of the appendices (1) to (10), wherein
the drive source includes an electric motor driven by electric power.

A work machine of appendix (12) includes:
the drive device according to any one of appendices (1) to (11); and
the load driven by the drive device.

Although the embodiment of the present invention has been described above, the scope of the present invention is not limited thereto, and the present invention can be implemented by expanding or changing it without departing from the gist of the invention.

### INDUSTRIAL APPLICABILITY

The present invention is applicable to work machines such as a construction machine and an agricultural machine, for example.

### REFERENCE SIGNS LIST

1 electric shovel (work machine)
4 load
100 drive device
101 drive source
101a electric motor
102 elastic body
102c torsion bar
102c1 penetration portion
102c2 one end portion
102c3 other end portion
103 detecting portion
103a detecting shaft
103b detector
103b1 encoder
104 gearbox
105 outputting shaft

## Claims

1. A drive device comprising:
a drive source that generates a rotary drive force; and
an elastic body that connects the drive source and a load,
wherein the elastic body includes a torsion bar.

2. The drive device according to claim 1, wherein the torsion bar constitutes an outputting shaft that drives the load.

3. The drive device according to claim 1, wherein the torsion bar has flange portions on one side and the other side.

4. The drive device according to claim 3, wherein the flange portion on the other side is provided to be rotatable with respect to the flange portion on the one side.

5. The drive device according to claim 4, wherein
the drive source is connected to the other side of the torsion bar in the axial direction, and
the load is connected to the one side of the torsion bar in the axial direction.

6. The drive device according to claim 1, further comprising a detecting portion that detects displacement of the torsion bar.

7. The drive device according to claim 6, wherein the torsion bar has a penetration portion penetrating in an axial direction of the torsion bar, and
the detecting portion is provided in the penetration portion.

8. The drive device according to claim 7, wherein the detecting portion comprises
a detecting shaft extending in the axial direction and
a detector detecting displacement of the detecting shaft, wherein
the detector is fixed to one side of the torsion bar in the axial direction, and
the detecting shaft is connected to the other side of the torsion bar in the axial direction.

9. The drive device according to claim 8, wherein
the detector is fixed to one end portion of the torsion bar on one side in the axial direction, and
the detecting shaft is connected to the other end portion of the torsion bar on the other side in the axial direction.

10. The drive device according to claim 8, wherein the drive source is connected to the other side of the torsion bar in the axial direction, and
the load is connected to the one side of the torsion bar in the axial direction.

11. The drive device according to claim 8, wherein the detector includes an encoder.

12. The drive device according to claim 8, further comprising a gearbox that changes a speed of a rotary drive force of the drive source and outputs the rotary drive force to the torsion bar, wherein
the gearbox is disposed on at least one of one side in the axial direction and the other side in the axial direction with respect to the torsion bar.

13. The drive device according to claim 12, wherein the gearbox is disposed on a side opposite to the detector with respect to the torsion bar in the axial direction.

14. The drive device according to claim 1, wherein the drive source includes an electric motor driven by electric power.

15. A work machine comprising:
the drive device according to any one of claims 1 to 14; and
the load driven by the drive device.

16. A drive device comprising:
a drive source that generates a rotary drive force; and
an elastic body that connects the drive source and a load, wherein
the elastic body constitutes an outputting shaft that drives the load.
